# FASCICULE DE BREVET EUROPEEN

(11) **EP 0 987 389 B1**
(45) Date de publication et mention de la délivrance du brevet: **03.11.2004**
(21) Numéro de dépôt: 99115645.6
(22) Date de dépôt: 07.08.1999
(51) Int. Cl.: E05B 49/00, H01M 2/10

(54) **Télécommande plate notamment pour véhicule automobile**
Flache Fernbedienung , insbesondere für Kraftfahrzeuge
Flat remote control , particularly for motor vehicles

(30) Priorité: 16.09.1998 FR 9811548
(43) Date de publication de la demande: 22.03.2000
(73) Titulaire: VALEO SECURITE HABITACLE S.A.S., 94042 Créteil Cédex (FR)
(72) Inventeur: Moizeau, Gérard, 91160 Longjumeau (FR)
(74) Mandataire: Rosolen-Delarue, Katell

(56) Documents cités:
- EP-A- 0 760 412
- DE-A- 3 627 194
- DE-A- 4 444 913
- US-A- 2 975 226

## Description

La présente invention est relative aux télécommandes, notamment pour véhicule automobile.

On sait que, pour un plus grand confort de l'utilisateur, on souhaite réaliser le verrouillage et le déverrouillage automatique des ouvrants dans les véhicules automobiles.

De nombreux systèmes permettant de commander le verrouillage et le déverrouillage des portières (ainsi que le déblocage du système d'anti-démarrage du véhicule) ont déjà été proposés.

Un but de l'invention est de proposer une télécommande à boîtier plat, par exemple d'un format voisin de celui d'une carte à puce standard.

Un autre but de l'invention est de proposer une télécommande de ce type dans laquelle les différentes fonctions techniques associées à la télécommande sont intégrées de façon ergonomique dans le boîtier de celle-ci, en n'étant pratiquement pas perceptibles extérieurement, de sorte que ladite télécommande se présente essentiellement pour l'utilisateur comme une carte.

Ainsi, l'invention propose une télécommande notamment de véhicule automobile, caractérisée en ce qu'elle est apte à être également utilisée comme un badge, son boîtier présentant une forme générale parallélépipédique plate, ledit boîtier comportant dans son épaisseur un logement dans lequel est monté un étui pivotant destiné à recevoir au moins une pile plate, ce logement étant fermé par une tête amovible dont la forme prolonge celle du reste du boîtier et en est complémentaire, l'étui étant tel que lorsque la tête est retirée par rapport au reste du boîtier, il peut être pivoté pour être sorti au moins partiellement par rapport au reste du boîtier, de sorte que l'utilisateur peut alors avoir accès à la pile pour la changer.

Cette télécommande est avantageusement complétée par les différentes caractéristiques suivantes prises seules ou selon toutes leurs combinaisons techniquement possibles :
- le boîtier comporte le long d'un de ses bords dans sa longueur un logement formant fourreau destiné à recevoir un insert métallique qui peut être utilisé comme clé mécanique de secours ;
- la tête qui ferme le logement de la pile ferme également le logement de l'insert ;
- ladite tête est solidaire de l'insert ;
- la tête présente une protubérance qui est un renflement qui s'étend en saillie vers l'intérieur du boîtier et qui coopère avec un point dur que constitue au moins une surépaisseur sur la face intérieure du boîtier ;
- la tête présente un ergot apte à constituer un outil permettant à un utilisateur de dégager des caches de serrure, notamment sur des portières de véhicule ;
- cet ergot est en matière plastique ;
- l'étui pivotant est d'une pièce avec une partie formant levier qui est destinée à être saisie et à permettre de faire pivoter ledit étui de sa position escamotée à sa position où il est sorti du logement ;
- la tête présente un évidement dans lequel la partie formant levier est reçue lorsque ladite tête est en place sur le reste du boîtier ;
- la paroi qui définit le logement dans lequel est disposé l'étui pivotant présente un dégagement recevant la partie formant levier lorsque l'étui est basculé dans sa position où il est sorti ;
- la pièce qui constitue l'étui et le levier présente entre ces deux parties une nervure apte à recevoir un joint d'étanchéité ;
- les parois du boîtier présentent au voisinage de l'ouverture du logement dans lequel est disposé l'étui pivotant une légère inclinaison qui facilite la mise en place, à force, de l'étui et de son axe ;
- le logement comporte deux lames destinées à assurer la connexion électrique entre la pile et l'électronique de la télécommande, l'une de ces lames s'étendant latéralement dans le logement et étant destinée à venir en contact avec la tranche de la pile, l'autre de ces lames s'étendant à partir du fond du boîtier et étant destinée à venir en contact avec une face de la pile ;
- la première lame présente un pli qui définit un point dur qui permet de verrouiller élastiquement la pile et l'étui lorsqu'ils sont basculés dans leur position escamotée à l'intérieur du logement ;
- l'étui pivotant présente un évidement dans lequel la deuxième lame s'étend lorsque l'étui est pivoté d'une position à une autre ;
- les pieds des lames sont surmoulés dans une surépaisseur qui sépare de façon étanche le logement de la pile d'un logement dans lequel est disposée l'électronique de la télécommande ;
- le boîtier présente une forme en dôme au niveau d'une ou plusieurs zones formant bouton de commande ;
- le boîtier reçoit à l'intérieur de cette forme en dôme une coupelle métallique qui, lorsqu'un opérateur appuie sur ladite forme en dôme, vient en contact par son bord périphérique sur une piste annulaire de contact et par sa partie centrale sur un plot central de contact ;
- son électronique est portée par une carte et le plot central est relié à un circuit de ladite carte par l'intermédiaire d'une liaison qui traverse ladite carte ;
- l'électronique de la télécommande comporte une diode électro-luminescente qui n'est pas extérieurement apparente lorsqu'elle n'est pas activée, mais qui est visible par transparence à travers le fond du boîtier lorsqu'elle est allumée ;
- la paroi du boîtier est aminci au droit de la diode ;
- la diode électro-luminescente est située entre le ou les boutons de commande et le bord du boîtier ;
- le boîtier intègre une languette permettant d'identifier la télécommande ;
- cette languette d'identification est reçue dans une ouverture formant glissière que présente le boîtier ;
- elle se présente sous la forme d'un boîtier plat d'un format voisin de celui d'une carte à puce standard.

D'autres caractéristiques et avantages de l'invention ressortiront encore de la description qui suit. Cette description est purement illustrative et non limitative. Elle doit être lue en regard des dessins annexés, sur lesquels :
- la figure 1 est une représentation en perspective d'une télécommande formant carte conforme à un mode de réalisation possible de l'invention ;
- la figure 2 est une représentation en perspective de la télécommande de la figure 1 dans laquelle l'insert formant clé mécanique est désengagé par rapport au reste du boîtier, l'avant du boîtier de la télécommande ayant été représenté d'une part lorsque la pile est escamotée à l'intérieur dudit boîtier et d'autre part lorsque la pile est sortie par rapport audit boîtier ;
- les figures 3a et 3b sont des représentations du boîtier de la télécommande de la figure 1 en vue en coupe selon le plan médian de celui-ci, la pile y étant représentée respectivement sortie de son logement et escamotée dans celui-ci ;
- les figures 4a et 4b sont des représentations schématiques en perpective d'un demi-boîtier de la télécommande de la figure 1, sur lesquelles la pile est représentée respectivement sortie de son logement et escamotée dans celui-ci ;
- la figure 5 est une vue de dessus d'une télécommande formant carte conforme à un autre mode de réalisation possible pour l'invention ;
- la figure 6 est une vue en coupe selon la ligne VI-VI de la figure 5 ;
- la figure 7 est une vue en perspective représentant par en dessous une télécommande formant carte conforme à un mode de réalisation de l'invention, ainsi que l'insert qui sert de clé mécanique de secours et la languette d'identification qui lui sont associées.

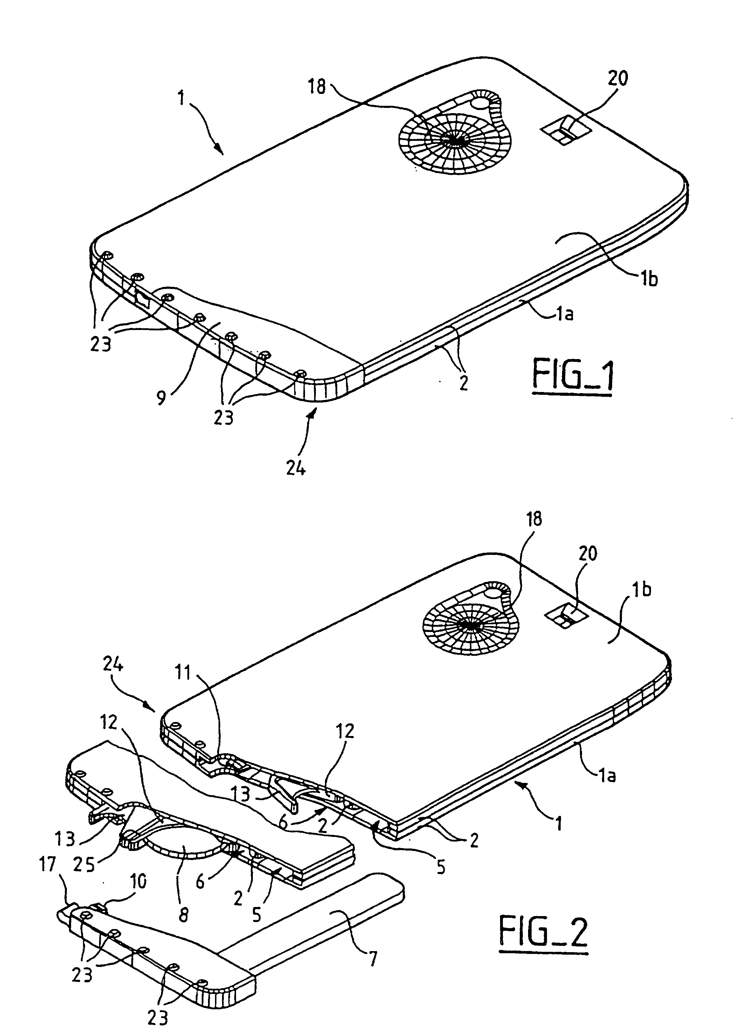

La télécommande formant carte illustrée sur les figures 1 et 2 se présente sous la forme d'un boîtier plat de forme parallélépipédique rectangle, d'un format voisin de celui d'une carte à puce standard.

Plus précisément, ce boîtier, référencé par 1, a une épaisseur de quelques millimètres et un contour rectangulaire d'une largeur et d'une longueur similaires à ceux d'une carte à puce, mais légèrement inférieurs à ceux-ci, de façon que ledit boîtier puisse être glisser dans une pochette de portefeuille, malgré son épaisseur.

Il est par exemple d'une épaisseur de 4 mm, d'une largeur de 51 mm, d'une longueur de 82 mm.

Ce boîtier 1 est principalement constitué de deux demi-coquilles plates 1a, 1b rapportées l'une sur l'autre et soudées par exemple par friction ou par ultrasons.

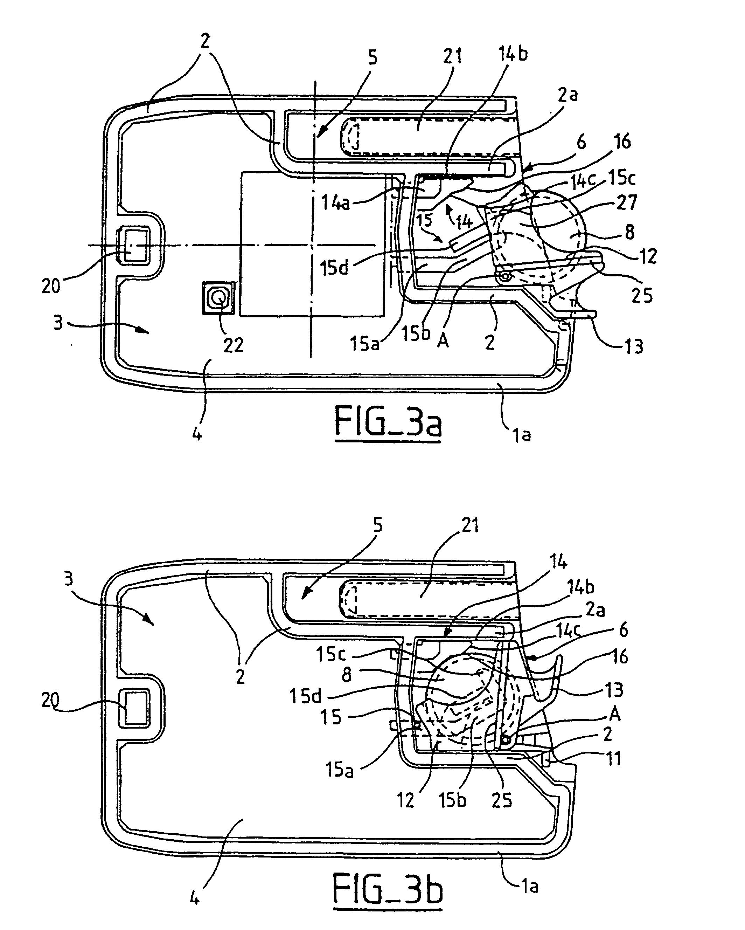

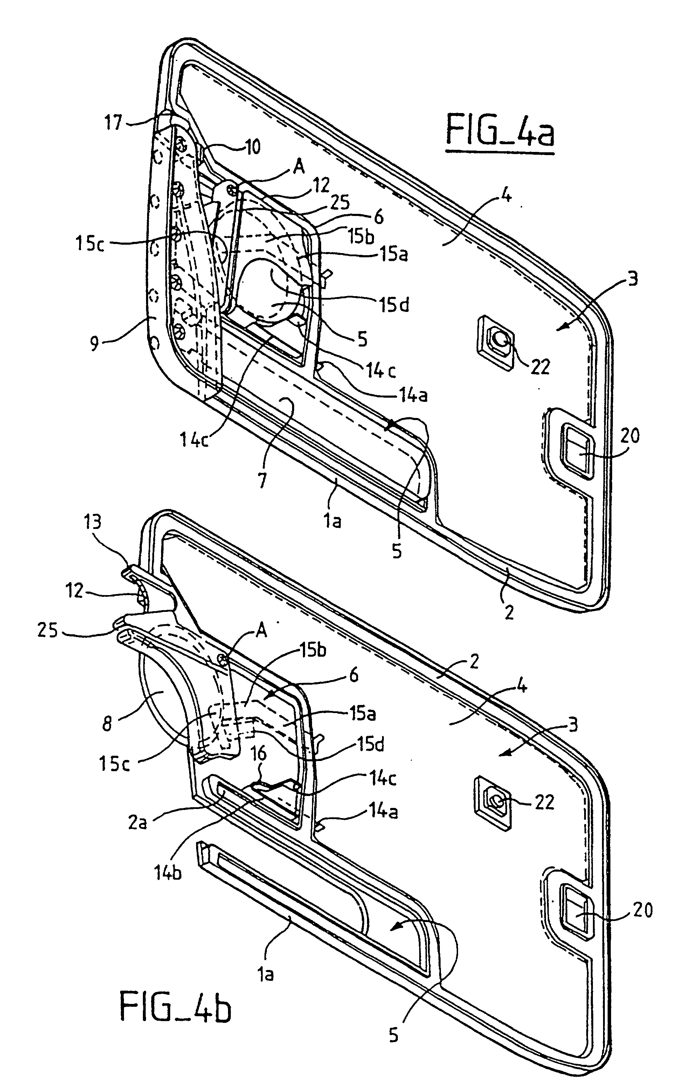

Ces deux demi-coquilles plates 1a, 1b présentent des surépaisseurs 2 qui, ainsi qu'on peut le voir plus particulièrement sur les figures 3a, 3b et 4a, 4b, bordent de façon continue les fonds des deux demi-coquilles 1a et 1b sur leurs deux longueurs et sur l'une de leur largeur et se prolongent également à l'intérieur du boîtier 1 pour y définir des parois qui, avec les bordures des demi-coquilles 1a, 1b, délimitent à l'intérieur du boîtier 1 d'une part un logement étanche 3 dans lequel est disposée une carte 4 portant l'électronique de la télécommande et d'autre part deux logements 5 et 6 qui reçoivent l'un un insert métallique 7, l'autre une pile plate 8.

Les deux logements 5 et 6 sont tous deux ouverts au niveau de l'extrémité où les deux demi-coquillesla, 1b ne sont pas fermées par une bordure en surépaisseur.

Le logement 5 qui reçoit l'insert métallique 7 est un logement allongé qui s'étend le long d'un des bords dans la longueur du boîtier 1 et qui constitue pour l'insert 7 un fourreau dans lequel ledit insert vient se ranger.

L'insert 7 est une lame métallique plate de forme parallélépipédique allongée qui présente des gravures intérieures (gravures "snake key" selon la terminologie de l'Homme du Métier) et dont les bords droits permettent le guidage dudit insert 7 dans son fourreau 5. Cet insert 7 est destiné à constituer une clé mécanique de secours pour les cas où la télécommande est défaillante.

Ledit insert 7 se termine par une tête 9 (figures 2, 4a, 7) qui est dans la même matière plastique que le boîtier 1 de la télécommande.

Cette tête 9 présente une forme qui est complémentaire de celle des deux demi-coquilles 1a et 1b rapportées l'une sur l'autre et qui, lorsque l'insert 7 est en place dans le fourreau que définit le logement 5, ferme le boîtier 1 de sorte que l'utilisateur ne voit pas les logements 5 et 6.

La tête 9 a une forme allongée qui présente une largeur qui décroît à partir du coin du boîtier 1, où l'étui que constitue le logement 5 est débouchant, jusqu'à son extrémité opposée.

Au voisinage de cette extrémité, ladite tête 9 présente une protubérance 10 qui est un renflement qui s'étend en saillie vers l'intérieur du boîtier 1 et qui coopère avec un point dur que constitue une surépaisseur 11 sur la face intérieure de l'une des deux demi-coquilles 1a, 1b pour empêcher que ladite tète 9 ne s'écarte par rapport au reste du boîtier 1 autrement que sous l'effet d'un effort exercé par l'utilisateur.

La tête 9 est également prolongée au niveau de cette même extrémité par un ergot 17 qui est destiné à constituer un outil permettant à l'opérateur de dégager des caches de serrures sur les portières de son véhicule.

Cet ergot 17 est également en matière plastique de façon à éviter tout risque de rayure de la tôle de la voiture lorsque l'utilisateur se sert de cet ergot.

Le logement 6 est juxtaposé au logement 5, dont il est séparé par une paroi 2a qui s'étend dans la longueur du boîtier et qui délimite (en partie) à la fois le logement 5 et le logement 6. Ce logement 6 présente une section de forme générale carrée et intègre, avec la pile plate 8, d'une part des lames qui assurent la connexion électrique avec ladite pile 8 et d'autre part des moyens mécaniques qui permettent d'escamoter ladite pile plate 8 dans ledit logement 6 ou de la sortir par rapport audit logement.

Les moyens mécaniques qui permettent d'escamoter la pile 8 dans le logement 6 ou de la sortir par rapport audit logement comportent un étui plat 12 dans lequel est reçu la pile 8.

Cet étui plat 12 est monté pivotant autour d'un axe A qui est tourillonné entre les deux demi-coquilles 1a, 1b et qui est perpendiculaire à celles-ci, cet axe A étant situé dans ledit logement 6 au voisinage de l'ouverture dudit logement 6, à l'opposé de la paroi 2a qui délimite ledit logement 6 et le logement 5.

Ainsi, ledit étui 12 peut pivoter entre une position où il est en partie sorti du logement 6 et une position où il est rangé à l'intérieur dudit logement 6.

Ledit étui 12 présente d'un côté une ouverture par laquelle la pile 8 est mise en place dans ledit étui 12, lorsque celui-ci est dans sa position où il est en partie sorti du logement 6, le contour dudit étui 12 étant tel que lorsque la pile 8 est en place dans ledit étui 12, elle dépasse en partie dudit étui 12, ce qui permet à l'opérateur de la saisir lorsque l'étui 12 est basculé en dehors du logement 6.

Cet étui 12 est d'une pièce avec une partie 13 formant levier qui s'étend à travers l'ouverture du logement 6 lorsque celui-ci est dans sa position escamotée à l'intérieur dudit logement, cette partie 13 étant destinée à être saisie par l'opérateur pour lui permettre de faire pivoter ledit étui 12 d'une position à une autre.

La tête 9 de l'insert 7 présente quant à elle un évidement dans lequel la partie 13 formant levier est reçue lorsque ledit insert 7 est en place dans son fourreau 5 et que ladite tête 9 ferme le boîtier 1.

Au niveau de l'ouverture du logement 6, la paroi dudit logement 6 au voisinage de laquelle se trouve l'axe A se termine en biais pour définir un dégagement permettant à ladite partie 13 formant levier de ne venir en appui contre ladite paroi que lorsque l'étui 12 a suffisamment basculé pour permettre d'accéder à la pile 8.

On notera que l'axe A est mis en place à force dans le logement 6 une fois que les deux demi-coquilles 1a, 1b sont soudées l'une sur l'autre. Les fonds des deux demi-coquilles 1a, 1b présentent au voisinage de l'ouverture du logement 6 une légère inclinaison qui facilite cette mise en place.

En outre, une nervure 25 s'étend sur toute la périphérie de la pièce qui constitue l'étui 12 et le levier 13, entre ledit étui 12 et ledit levier 13. Cette nervure 25 peut recevoir un joint qui assure la fermeture étanche du logement 6, lorsque l'étui 12 et la pile 8 sont dans leur position escamotée.

Les lames assurant la connexion électrique entre les bornes de la pile 8 à la carte 4 ont été référencées par 14 et 15. Elles s'étendent toutes deux dans le fond de la demi-coquille 1a.

La lame 14 présente un pied 14a qui traverse la paroi qui sépare le logement 6 et le logement 3 et qui est parallèle au fond de la demi-coquille 1a, une partie 14b qui prolonge ladite partie 14a et qui s'étend le long de la paroi qui sépare les logements 5 et 6, parallèlement à celle-ci et une partie 14c qui prolonge la partie 14b en étant repliée en V par rapport à celle-ci.

La partie 14c constitue une languette élastique destinée à être en contact avec la tranche de la pile 8, c'est à dire avec la borne positive de celle-ci.

Elle présente un pli 16 qui définit sur ladite languette 14c un point dur qui permet de verrouiller élastiquement la pile 8 et l'étui 12 lorsque ceux-ci sont basculés dans leur position escamotée à l'intérieur du logement 6.

La lame 15 présente :
- une partie 15a qui traverse la paroi qui sépare le logement 6 et le logement 3 et se prolonge à l'intérieur du logement 6, en s'étendant perpendiculairement à ladite paroi et parallèlement au fond de la demi-coquille 1a,
- une partie 15b qui prolonge en biais ladite partie 15a, en s'étendant parallèlement au fond de la demi-coquille 1a, à partir de ladite partie 15a vers l'ouverture du logement 6 et vers la paroi 2a de séparation entre les logements 5 et 6,
- un retour 15c qui est également parallèle au fond de la demi-coquille 1a et qui s'étend à partir de ladite partie 15b vers la lame 14,
- une languette élastique 15d qui est inclinée par rapport au fond de la demi-coquille la et qui s'étend à partir du retour 15c vers la paroi qui sépare le logement 6 et le logement 3, en étant perpendiculaire à la direction selon laquelle ledit retour 15c s'étend.

Cette languette 15d est destinée à venir élastiquement en contact avec la face inférieure de la pile 8, c'est à dire avec la borne négative de celle-ci.

Avec une telle configuration, la pile 8 appuie progressivement sur cette languette 15d lorsque ladite pile 8 et l'étui 12 sont rabattus dans leur position escamotée à l'intérieur du logement 6.

Par ailleurs, pour éviter que les sollicitations d'appui ne soient trop importantes lorsque l'étui passe au-dessus de cette languette 15d - ce qui pourrait écraser ladite languette 15d au delà de sa limite d'élasticité - l'étui 12 présente sur sa face en regard de la demi-coquille 1a un évidement 27 (figure 3a) dont la forme permet à l'étui 12 de passer au dessus de ladite languette 15d sans l'écraser, ladite languette s'étendant alors dans l'épaisseur dudit étui 12.

On notera que le fait que la lame 14 vienne en appui sur la tranche de la pile 8 pour assurer le contact avec la borne positive, tandis que la lame de contact 15 vient en appui sur la face de la pile qui correspond à sa borne négative, protège le circuit électronique contre des destructions par inversion de polarité qui pourraient être dues à une inversion de la pile par l'utilisateur. Avec la structure proposée, une inversion du sens de la pile n'entraîne pas d'inversion de polarité pour la carte 4 étant donné que dans ce cas les deux lames de contact sont alors au même potentiel (potentiel positif).

Par ailleurs, pour qu'il y ait étanchéité entre le logement 3 et le logement 6, la paroi de séparation entre ces deux logements est surmoulée sur les pieds des lames 14 et 15. A l'intérieur du logement 3, lesdites lames se terminent par des plots qui s'étendent perpendiculairement au plan général de la télécommande et qui sont destinés à être reçus dans des fentes complémentaires formant fiches femelles de connexion que présente la carte électronique 4.

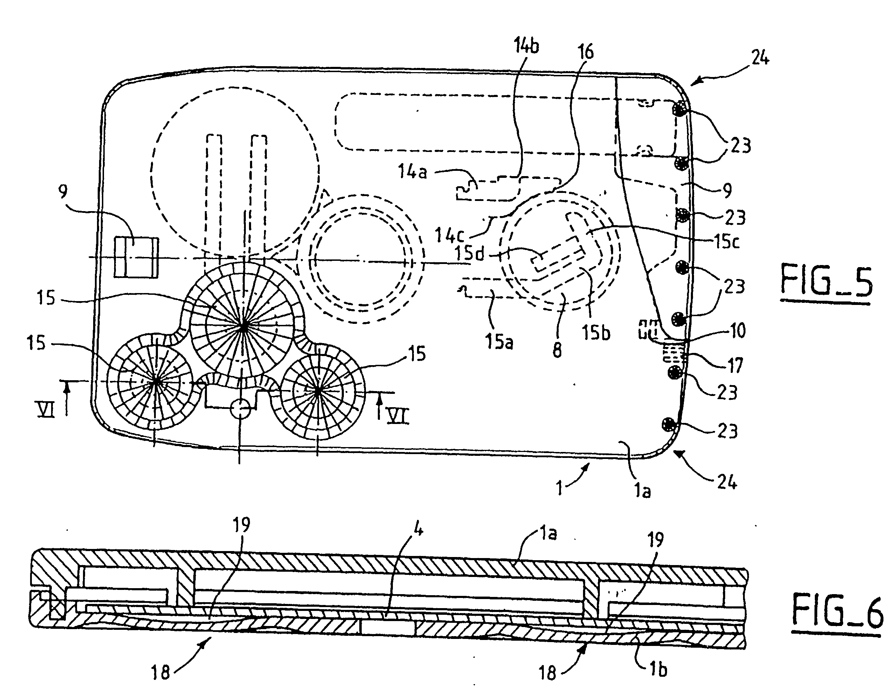

Dans la variante de réalisation illustrée sur les figures 1 à 4, le bouton de commande, référencé par 18, est un bouton unique qui permet de commander le verrouillage et le déverrouillage des portières. Bien entendu, comme l'illustrent les figures 5 et 6, un nombre plus important de boutons de commande 18 peut être prévu pour par exemple commander séparément la fonction de verrouillage de portières, la fonction de déverrouillage ou le mode de fonctionnement mains libres.

La demi-coquille 1b présente au niveau du ou des boutons de commande des amincissements qui lui donne une forme en dôme.

A l'intérieur du boîtier 1, le creux qui correspond à ce dôme reçoit une coupelle métallique 19 qui, lorsqu'un opérateur appuie sur les dômes 18, vient en contact par son bord périphérique sur une piste de contact annulaire que présente la carte 4, tandis que sa partie centrale vient en contact avec un plot central que porte ladite carte 4 (plot 22 sur les figures 3a, 4a et 4b), ce plot central étant relié au circuit que porte ladite carte 4 sur sa face opposée au fond de la demi-coquille 1b par l'intermédiaire d'un « via » traversant ladite carte 2.

La carte 4 porte une diode électro-luminescente permettant à l'utilisateur de vérifier le bon fonctionnement de sa télécommande. Cette diode n'est pas extérieurement apparente lorsqu'elle n'est pas activée, mais est visible par transparence à travers le fond de la demi-coquille 1b lorsqu'elle est allumée, la paroi de ladite demi-coquille étant à cet effet amincie au droit de ladite diode (épaisseur inférieure à 2/10^{e} de mm, par exemple).

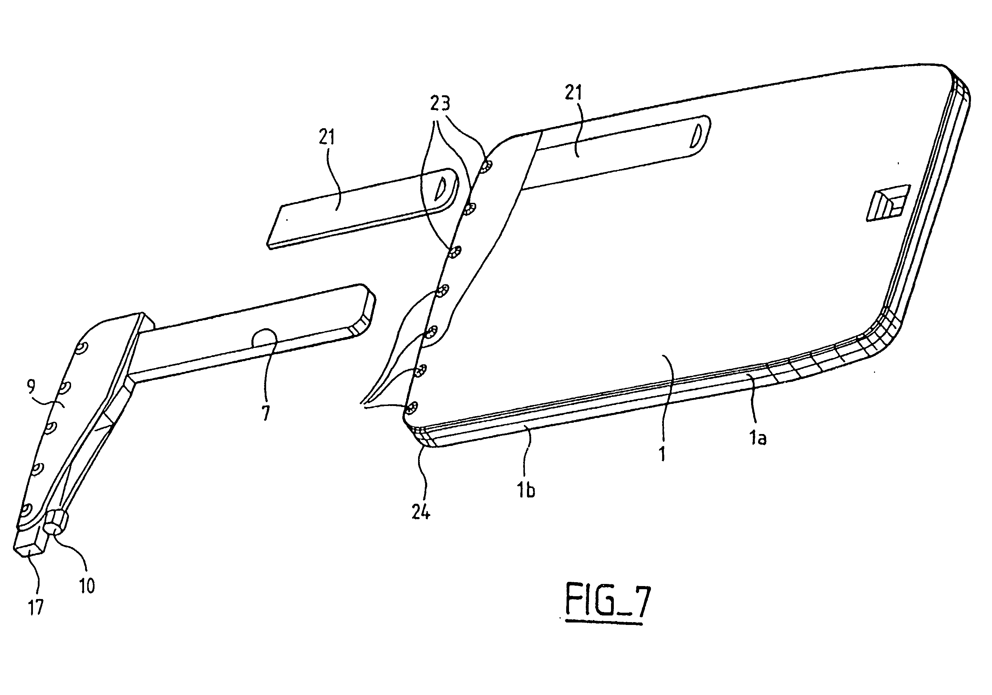

Par ailleurs, ainsi qu'illustré notamment sur la figure 7, la carte peut porter une languette d'identification 21 qui s'insère dans la paroi qui constitue le fond de la demi-coquille 1a. La paroi qui constitue le fond de ladite demi-coquille 1a présente à cet effet une ouverture longitudinale qui s'étend dans la longueur du logement 5, les bords de ladite paroi étant conformés en queue d'aronde, de telle sorte que ladite ouverture et lesdits bords, définissent une glissière pour la languette 21.

Cette languette 21 est extérieurement visible. Elle est destinée à permettre à l'utilisateur de reconnaître sa propre télécommande, au moyen d'une couleur ou d'un signe de référence particulier portés par ladite languette 21.

Enfin, on notera également que la diode électroluminescente est avantageusement en avant par rapport au(x) bouton(s) poussoir(s) de façon que lorsque l'opérateur saisi la carte, il ne vienne pas masquer ladite diode.

Comme on l'aura compris, le boîtier plat qui vient d'être décrit sert de télécommande et de carte.

En actionnant le ou les boutons 18, l'utilisateur commande le verrouillage/déverrouillage des portières, le verrouillage/déverrouillage du coffre, le passage en mode de fonctionnement "mains libres", etc.

Ladite carte électronique 4 intègre des moyens formant transpondeur qui sont alors interrogés par le lecteur pour fournir à un calculateur dans le véhicule un code autorisant le débloclage de la fonction anti-démarrage.

Si la pile 8 est déchargée - ce que l'utilisateur constate du fait de l'absence d'émission par la diode électroluminescente
- ledit utilisateur désengage la tête 9 par rapport au reste dudit boîtier de façon à avoir accès au logement 6. Il saisit le levier 13 pour faire pivoter l'étui 12 jusqu'à sa position ou ledit étui 12 et la pile 8 sont sortis par rapport au logement 6. Puis, il change la pile 8 et bascule à nouveau l'étui 12 de façon que celui-ci retrouve sa position escamotée. Ensuite, il referme le boîtier en replaçant l'insert 7 dans son fourreau 5 et en le faisant coulisser dans ledit fourreau 5 jusqu'à ce que la protubérance 10 passe sur le point dur 11 et que la tête 9 soit en place par rapport au reste du boîtier 1.

De même, lorsque pour une raison ou pour une autre, la télécommande est en panne et que l'utilisateur a besoin de se servir de l'insert qui constitue la clé mécanique de secours, il tire la tête 9 par rapport au reste dudit boîtier pour désengager ledit insert 7 par rapport à son fourreau 5.

## Revendications

1. Télécommande, notamment de véhicule automobile, **caractérisée en ce qu'**elle est apte à être également utilisée comme un badge, son boîtier (1) présentant une forme générale parallélépipédique plate, ledit boîtier (1) comportant dans son épaisseur un logement (6) dans lequel est monté un étui pivotant (12) destiné à recevoir au moins une pile plate (8), ce logement étant fermé par une tête amovible (9) dont la forme prolonge celle du reste du boîtier (1a, 1b) et en est complémentaire, l'étui (12) étant tel que lorsque la tête (9) est retirée par rapport au reste du boîtier (1a, 1b), il peut être pivoté pour être sorti au moins partiellement par rapport au reste du boîtier (1a, 1b), de sorte que l'utilisateur peut alors avoir accès à la pile (8) pour la changer.

2. Télécommande selon la revendication 1, **caractérisée en ce que** le boîtier (1) comporte le long d'un de ses bords dans sa longueur un logement (5) formant fourreau destiné à recevoir un insert métallique (7) qui peut être utilisé comme clé mécanique de secours.

3. Télécommande selon la revendication 2, **caractérisée en ce que** la tête (9) qui ferme le logement (6) de la pile (8) ferme également le logement (5) de l'insert (7).

4. Télécommande selon la revendication 3, **caractérisée en ce que** ladite tête (9) est solidaire de l'insert (7).

5. Télécommande, selon l'une des revendications précédentes, **caractérisée en ce que** la tête (9) présente une protubérance (10) qui est un renflement qui s'étend en saillie vers l'intérieur du boîtier et qui coopère avec un point dur (11) que constitue au moins une surépaisseur sur la face intérieure du boîtier.

6. Télécommande selon l'une des revendications précédentes, **caractérisée en ce que** la tête (9) présente un ergot (17) apte à constituer un outil permettant à un utilisateur de dégager des caches de serrure, notamment sur des portières de véhicule.

7. Télécommande selon la revendication 6, **caractérisée en ce que** cet ergot (17) est en matière plastique.

8. Télécommande selon l'une des revendications précédentes, **caractérisée en ce que** l'étui (12) pivotant est d'une pièce avec une partie (13) formant levier qui est destinée à être saisie et à permettre de faire pivoter ledit étui (12) de sa position escamotée à sa position où il est sorti du logement.

9. Télécommande selon la revendication 8, **caractérisée en ce que** la tête (9) présente un évidement dans lequel la partie (13) formant levier est reçue lorsque ladite tête (9) est en place sur le reste du boîtier (1).

10. Télécommande selon l'une des revendications 8 ou 9, **caractérisée en ce que** la paroi (2) qui définit le logement (6) dans lequel est disposé l'étui pivotant (12) présente un dégagement recevant la partie formant levier lorsque l'étui est basculé dans sa position où il est sorti.

11. Télécommande selon l'une des revendications 8 à 10, **caractérisée en ce que** la pièce qui constitue l'étui (12) et le levier (13) présente entre ces deux parties une nervure (25) apte à recevoir un joint d'étanchéité.

12. Télécommande selon l'une des revendications précédentes, **caractérisée en ce que** les parois du boîtier présentent au voisinage de l'ouverture du logement (6) dans lequel est disposé l'étui pivotant (12) une légère inclinaison qui facilite la mise en place, à force, de l'étui (12) et de son axe (A).

13. Télécommande selon l'une des revendications précédentes, **caractérisée en ce que** le logement (6) de l'étui (12) comporte deux lames (14, 15) destinées à assurer la connexion électrique entre la pile (8) et l'électronique (4) de la télécommande, l'une (14) de ces lames s'étendant latéralement dans le logement (6) et étant destinée à venir en contact avec la tranche de la pile (8), l'autre (15) de ces lames s'étendant à partir du fond du boîtier (1) et étant destinée à venir en contact avec une face de la pile (8).

14. Télécommande selon la revendication 13, **caractérisée en ce que** la première lame (14) présente un pli (16) qui définit un point dur qui permet de verrouiller élastiquement la pile (8) et l'étui (12) lorsqu'ils sont basculés dans leur position escamotée à l'intérieur du logement (6).

15. Télécommande selon l'une des revendications 13 ou 14, **caractérisée en ce que** l'étui pivotant (12) présente un évidement (27) dans lequel la deuxième lame (15) s'étend lorsque l'étui (12) est pivoté d'une position à une autre.

16. Télécommande selon l'une des revendications 13 à 15, **caractérisée en ce que** les pieds des lames (14, 15) sont surmoulés dans une surépaisseur (2) qui sépare de façon étanche le logement (6) de l'étui (12) d'un logement (3) dans lequel est disposée l'électronique (4) de la télécommande.

17. Télécommande selon l'une des revendications précédentes, **caractérisée en ce que** le boîtier (1) présente une forme en dôme au niveau d'une ou plusieurs zones (18) formant bouton de commande.

18. Télécommande selon la revendication 17, **caractérisée en ce que** le boîtier (1) reçoit à l'intérieur de cette forme en dôme (18) une coupelle métallique (19) qui, lorsqu'un opérateur appuie sur ladite forme en dôme (18), vient en contact par son bord périphérique sur une piste annulaire de contact et par sa partie centrale sur un plot central de contact.

19. Télécommande selon la revendication 18, **caractérisée en ce que** son électronique (4) est portée par une carte et **en ce que** le plot central (22) est relié à un circuit de ladite carte par l'intermédiaire d'une liaison qui traverse ladite carte.

20. Télécommande selon l'une des revendications précédentes, **caractérisée en ce que** l'électronique de la télécommande comporte une diode électro-luminescente qui n'est pas extérieurement apparente lorsqu'elle n'est pas activée, mais qui est visible par transparence à travers le fond du boîtier lorsqu'elle est allumée.

21. Télécommande selon la revendication 20, **caractérisée en ce que** la paroi du boîtier est aminci au droit de la diode.

22. Télécommande selon l'une des revendications précédentes, **caractérisée en ce que** le boîtier (1) intègre une languette (21) permettant d'identifier la télécommande.

23. Télécommande selon la revendication 26, **caractérisée en ce que** cette languette d'identification (21) est reçue dans une ouverture formant glissière que présente le boîtier (1).

24. Télécommande selon l'une des revendications précédentes, **caractérisée en ce qu'**elle se présente sous la forme d'un boîtier plat (1) d'un format voisin de celui d'une carte à puce standard.

## Patentansprüche

1. Fernbedienung, insbesondere für Kraftfahrzeuge, **dadurch gekennzeichnet, dass** sie auch als Kennmarke Anwendung finden kann, wobei deren Gehäuse (1) insgesamt die Form eines flachen Quaders aufweist, wobei das Gehäuse (1) in seiner Materialdicke eine Aufnahme (6) aufweist, in der ein verschwenkbares Fach (12) angeordnet ist, das dazu bestimmt ist, zumindest eine flache Batterie (8) aufzunehmen, wobei diese Aufnahme von einem abnehmbaren Kopf (9) verschlossen wird, dessen Form diejenige des restlichen Gehäuses (1a, 1b) fortsetzt und dazu komplementär ausgeführt ist, wobei das Fach (12) derart ausgeführt ist, dass dann, wenn der Kopf (9) bezüglich des restlichen Gehäuses (1a, 1b) zurückgezogen ist, es verschwenkt werden kann, um gegenüber dem restlichen Gehäuse (1a, 1b) zumindest teilweise hervorzutreten, so dass der Benutzer dann Zugang zur Batterie (8) haben kann, um sie auszuwechseln.

2. Fernbedienung nach Anspruch 1, **dadurch gekennzeichnet, dass** das Gehäuse (1) entlang eines seiner Ränder in seiner Länge eine hülsenartige Aufnahme (5) enthält, die dazu bestimmt ist, einen metallischen Einsatz (7) aufzunehmen, der als mechanischer Sicherheitsschlüssel verwendbar ist.

3. Fernbedienung nach Anspruch 2, **dadurch gekennzeichnet, dass** der Kopf (9), welcher die Aufnahme (6) für die Batterie (8) verschließt, auch die Aufnahme (5) für den Einsatz (7) verschließt.

4. Fernbedienung nach Anspruch 3, **dadurch gekennzeichnet, dass** der Kopf (9) fest mit dem Einsatz (7) verbunden ist.

5. Fernbedienung nach einem der vorangehenden Ansprüche, **dadurch gekennzeichnet, dass** der Kopf (9) einen Vorsprung (10) aufweist, der eine Verdickung darstellt, die nach innerhalb des Gehäuses vorspringend verläuft und mit einer festeren Stelle (11) zusammenwirkt, die von zumindest einer Überdicke an der Innenseite des Gehäuses gebildet wird.

6. Fernbedienung nach einem der vorangehenden Ansprüche, **dadurch gekennzeichnet, dass** der Kopf (9) einen Zapfen (17) enthält, der ein Werkzeug bilden kann, mit dem es einem Benutzer möglich ist, Schlossabdeckungen insbesondere an Fahrzeugtüren freizugeben.

7. Fernbedienung nach Anspruch 6, **dadurch gekennzeichnet, dass** dieser Zapfen (17) aus Kunststoff besteht.

8. Fernbedienung nach einem der vorangehenden Ansprüche, **dadurch gekennzeichnet, dass** das verschwenkbare Fach (12) einstückig mit einem Hebelteil (13) ausgebildet ist, das dazu bestimmt ist, ergriffen zu werden und das Verschwenken des Fachs (12) aus seiner eingezogenen Stellung in seine Stellung zu ermöglichen, in welcher es aus der Aufnahme heraustritt.

9. Fernbedienung nach Anspruch 8, **dadurch gekennzeichnet, dass** der Kopf (9) eine Ausnehmung aufweist, in welcher das Hebelteil (13) aufgenommen ist, wenn der Kopf (9) am restlichen Gehäuse (1) eingesetzt ist.

10. Fernbedienung nach einem der Ansprüche 8 oder 9, **dadurch gekennzeichnet, dass** die Wand (2), welche die Aufnahme (6) definiert, in welcher das verschwenkbare Fach (12) angeordnet ist, eine Aussparung aufweist, die das Hebelteil aufnimmt, wenn das Fach in seine hervortretende Stellung verschwenkt ist.

11. Fernbedienung nach einem der Ansprüche 8 bis 10, **dadurch gekennzeichnet, dass** das Teil, welches das Fach (12) und den Hebel (13) bildet, zwischen diesen beiden Teilen eine Rippe (25) aufweist, welche eine Dichtung aufnehmen kann.

12. Fernbedienung nach einem der vorangehenden Ansprüche, **dadurch gekennzeichnet, dass** die Wände des Gehäuses benachbart zur Öffnung der Aufnahme (6), in welcher das verschwenkbare Fach (12) angeordnet ist, eine geringe Neigung aufweisen, welche das Kraft erfordernde Einsetzen des Fachs (12) und seiner Achse (A) erleichtert.

13. Fernbedienung nach einem der vorangehenden Ansprüche, **dadurch gekennzeichnet, dass** die Aufnahme (6) des Fachs (12) zwei Kontaktstreifen (14, 15) enthält, die dazu bestimmt sind, die elektrische Verbindung zwischen Batterie (8) und Elektronik (4) der Fernbedienung zu gewährleisten, wobei sich der eine Kontaktstreifen (14) seitlich in der Aufnahme (6) erstreckt und dazu bestimmt ist, mit dem Rand der Batterie (8) in Kontakt zu treten und der andere Kontaktstreifen (15) sich ausgehend vom Boden des Gehäuses (1) erstreckt und dazu bestimmt ist, mit einer Stirnfläche der Batterie (8) in Kontakt zu treten.

14. Fernbedienung nach Anspruch 13, **dadurch gekennzeichnet, dass** der erste Kontaktstreifen (14) einen Knick (16) aufweist, der eine festere Stelle definiert, die es ermöglicht, die Batterie (8) und das Fach (12) elastisch zu verriegeln, wenn sie in ihre in die Aufnahme (6) eingefahrene Stellung verschwenkt werden.

15. Fernbedienung nach einem der Ansprüche 13 oder 14, **dadurch gekennzeichnet, dass** das verschwenkbare Fach (12) eine Ausnehmung (27) aufweist, in welcher sich der zweite Kontaktstreifen (15) erstreckt, wenn das Fach (12) von einer Stellung in die andere verschwenkt wird.

16. Fernbedienung nach einem der Ansprüche 13 bis 15, **dadurch gekennzeichnet, dass** die Ansätze der Kontaktstreifen (14, 15) in einer Überdicke (2) eingegossen sind, welche die Aufnahme (6) für das Fach (12) in dichter Weise von einer Aufnahme (3) trennt, in welcher die Elektronik (4) der Fernbedienung angeordnet ist.

17. Fernbedienung nach einem der vorangehenden Ansprüche, **dadurch gekennzeichnet, dass** das Gehäuse (1) in einem oder in mehreren Bereichen (18) eine Kuppelform aufweist, die einen Steuerknopf bildet.

18. Fernbedienung nach Anspruch 17, **dadurch gekennzeichnet, dass** das Gehäuse (1) innerhalb dieser Kuppelform (18) einen Metallteller (19) aufnimmt, der dann, wenn eine Bedienperson auf die Kuppelform (18) drückt, mit seinem Umfangsrand eine ringförmige Kontaktbahn und mit seinem Mittelbereich einen mittleren Kontaktklotz kontaktiert.

19. Fernbedienung nach Anspruch 18, **dadurch gekennzeichnet, dass** ihre Elektronik (22) von einer Karte getragen wird und dass der mittlere Kontaktklotz (22) mit einer Schaltung dieser Karte über eine Verbindung verbunden ist, welche durch die Karte hindurchtritt.

20. Fernbedienung nach einem der vorangehenden Ansprüche, **dadurch gekennzeichnet, dass** die Elektronik der Fernbedienung eine LED-Diode enthält, die von außen nicht in Erscheinung tritt, wenn sie nicht aktiviert ist, jedoch durch Transparenz durch den Boden des Gehäuses sichtbar wird, wenn sie eingeschaltet ist.

21. Fernbedienung nach Anspruch 20, **dadurch gekennzeichnet, dass** die Wand des Gehäuses im Bereich der Diode dünner ausgeführt ist.

22. Fernbedienung nach einem der vorangehenden Ansprüche, **dadurch gekennzeichnet, dass** das Gehäuse (1) eine Zunge (21) umfasst, mit der die Fernbedienung identifiziert werden kann.

23. Fernbedienung nach Anspruch 26, **dadurch gekennzeichnet, dass** die Identifikationszunge (21) in einer eine Gleitführung bildenden Öffnung aufgenommen ist, welche das Gehäuse (1) aufweist.

24. Fernbedienung, nach einem der vorangehenden Ansprüche, **dadurch gekennzeichnet, dass** sie in Form eines flachen Gehäuses (1) vorliegt, das ein Format ähnlich einer standardmäßigen Chipkarte aufweist.

## Claims

1. A remote control, in particular of a motor vehicle, **characterised in that** it can also be used as a badge, as its casing (1) presents a general parallepiped and flat shape, said casing (1) including in its thickness a housing (6) in which a swivelling case (12) intended to accommodate at least one flat battery (8), said housing being closed by a removable head (9) the shape of which is an extension of the shape of the remaining part of the casing (1a, 1b) and is complementary to it, the case (12) being such that when the head (9) is removed from the remaining part of the casing (1a, 1b), it can be swivelled to be pulled out at least partially relatively to the remaining part of the casing (1a, 1b), so that it is possible for the user to have access to the battery (8) to replace it.

2. A remote control according to claim 1, **characterised in that** the casing (1) contains along the length of one of its edges a housing (5) forming a sleeve intended to receive a metal insert (7) which can be used as a mechanical spare key.

3. A remote control according to claim 2, **characterised in that** the head (9) which closes the battery's (8) housing (6) also forms the insert's (7) housing (5).

4. A remote control according to claim 3, **characterised in that** said head (9) is firmly secured to the insert (7).

5. A remote control, according to one of the previous claims, **characterised in that** the head (9) features a bulge (10) protruding towards the inside of the casing and which cooperates with a hard spot (11) constituted by at least one overthickness on the casing inner face.

6. A remote control according to one of the previous claims, **characterised in that** the head (9) features a lug (17) able to constitute a tool making it possible for the user to disengage lock covers, in particular on vehicle doors.

7. A remote control according to claim 6, **characterised in that** this lug (17) is made of plastic.

8. A remote control according to one of the previous claims, **characterised in that** the swivelling case (12) is one single-part, a part (13) of which constitutes a lever intended to be seized and to make said case (12) swivel from its retracted position to the position where it is out of the housing.

9. A remote control according to claim 8, **characterised in that** the head (9) features a recess into which the part (13) constituting the lever is received when said head (9) is in position on the remaining part of the casing (1).

10. A remote control according to one of claims 8 or 9, **characterised in that** the wall (2) defining the housing (6) in which the swivelling case (12) is set features a release receiving the part constituting the lever when the case is switched to its position.

11. A remote control according to one of claims 8 to 10, **characterised in that** the part constituting the case (12) and the lever (13) features, between both parts, a rib (25) that can receive a sealing device.

12. A remote control according to one of the previous claims, **characterised in that** the casing walls feature, near the opening of the housing (6) inside which the swivelling case (12) is set, a slight slope facilitating the forced installation of the case (12) and its pin (A).

13. A remote control according to one of the previous claims, **characterised in that** the housing (6) of the case (12) contains two blades (14, 15) intended to ensure electrical connection between the battery (8) and the remote control's electronic part (4), one (14) of these blades being extended sideward in the housing (6) and intended to come into contact with the battery's edge (8), the other one (15) of these blades extending from the bottom of the casing (1) and being intended to come into contact with one of the battery's (8) side.

14. A remote control according to claim 13, **characterised in that** the first blade (14) features a ply (16) defining a hard spot allowing flexible locking of the battery (8) and the case (12) when they are switched to their retracted position inside the housing (6).

15. A remote control according to one of claims 13 or 14, **characterised in that** the swivelling case (12) features a recess (27) inside which the second blade (15) extends when the case (12) is swivelled from one position to another.

16. A remote control according to claims 13 to 15, **characterised in that** the blade feet (14, 15) are overmoulded in an overthickness (2) constituting an impervious separation between the case's (12) housing (6) and a housing (3) inside which the remote control's electronic part (4) is set.

17. A remote control according to one of the previous claims, **characterised in that** the casing (1) features a dome shape at one or several places (18) forming a control knob.

18. A remote control according to claim 17, **characterised in that** the casing (1) accommodates inside this dome shape (18) a metal cup (19) the peripheral edge of which comes into contact with a circular contact track and the central contact stud of which comes into contact with its central part, when an operator depresses said dome shape (18).

19. A remote control according to claim 18, **characterised in that** its electronic part (4) is supported by a board and **in that** the central stud (22) is connected to a circuit of said board via a connection crossing said board.

20. A remote control according to one of the previous claims, **characterised in that** the remote control's electronic part contains a light-emitting diode which is not visible from outside when not activated, but which can be seen showing through the bottom of the casing when it is lit up.

21. A remote control according to claim 20, **characterised in that** the casing wall is thinned down level with the diode.

22. A remote control according to one of the previous claims, **characterised in that** the casing (1) includes a tongue (21) allowing identification of the remote control.

23. A remote control according to claim 26, **characterised in that** said identification tongue (21) is accommodated in an opening which constitutes a slide way featured by the casing (1).

24. A remote control according to one of the previous claims, **characterised in that** it is presented in the form of a flat casing (2) with a size similar to that of a standard chip card.
